# EUROPÄISCHE PATENTSCHRIFT

(11) **EP 2 707 862 B1**
(45) Veröffentlichungstag und Bekanntmachung des Hinweises auf die Patenterteilung: **09.08.2017**
(21) Anmeldenummer: 12718266.5
(22) Anmeldetag: 07.05.2012
(51) Int. Cl.: G08G 1/16, G01B 11/02, G01C 3/06, G06T 7/00, G06K 9/00

(54) **ABSTANDSBESTIMMUNG MITTELS EINES KAMERASENSORS**
DISTANCE MEASUREMENT BY MEANS OF A CAMERA SENSOR
DÉTERMINATION DE DISTANCE AU MOYEN D'UN CAPTEUR DE CAMÉRA

(30) Priorität: 11.05.2011 DE 102011075674
(43) Veröffentlichungstag der Anmeldung: 19.03.2014
(73) Patentinhaber: Continental Teves AG & Co. oHG, 60488 Frankfurt (DE)
(72) Erfinder: STÄHLIN, Ulrich, 65670 Eschborn (DE)
(74) Vertreter: Wagner, Philipp
(86) Internationale Anmeldenummer: PCT/EP2012/058354
(87) Internationale Veröffentlichungsnummer: WO 2012/152746

(56) Entgegenhaltungen:
- EP-A1- 2 416 115
- WO-A1-2010/007392
- DE-A1-102006 005 512
- DE-A1-102008 042 631
- DE-A1-102009 012 917
- BRAUCKMANN M E ET AL: "Towards All Around Automatic Visual Obstacle Sensing for Cars", 19941024; 19941024 - 19941026, 24. Oktober 1994 (1994-10-24), Seiten 79-84, XP010258310,

## Beschreibung

Die Erfindung betrifft ein Abstandsbestimmungsverfahren mittels eines Kamerasensors gemäß Oberbegriff von Anspruch 1 und ein Abstandsbestimmungssystem gemäß Oberbegriff von Anspruch 19.

Im Stand der Technik sind bereits unterschiedliche Sensorsysteme zur Umfelderfassung und insbesondere zur Entfernungsmessung zu einem Zielobjekt bekannt. Die WO 2008/080951 offenbart in diesem Zusammenhang ein Fahrerassistenzsystem, welches z.B. mittels eines Radar- oder Lidarsensors eine Entfernung zu einem vorausfahrenden Fahrzeug ermittelt. Um trotz Fahrbahnunebenheiten und dadurch verursachten Neigungswinkeln des Eigenfahrzeugs eine Ausrichtung der Entfernungssensoren in Richtung des Vorausfahrzeugs zu gewährleisten, ist eine Kamera vorgesehen, welche das Vorausfahrzeug erkennt und die Ausrichtung der Entfernungssensoren an die jeweilige Situation anpasst. Eine exakte Ausrichtung der Entfernungssensoren ist jedoch nur dann möglich, wenn die Kamera und der Entfernungssensor entweder auf gleicher Höhe im Fahrzeug angebracht sind oder aber mittels Triangulation, sofern der Abstand der Kamera zum Vorausfahrzeug bekannt ist. Aus diesem Grund wird gemäß der WO 2008/080951 die Entfernung der Kamera zum Vorausfahrzeug anhand des Kamerabilds geschätzt. Die Anforderung an die Genauigkeit der Entfernungsbestimmung darf dabei allerdings nur gering sein.

Die DE 10 2007 048 809 A1 beschreibt ein Verfahren und eine Vorrichtung zur Erkennung von verdeckten Objekten im Straßenverkehr. Dabei ermittelt ein Positionsbestimmungssystem mittels verschiedener Sensoren, wie beipielsweise GPS-Modul, Radarsensor, Lidarsensor oder Stereokamera, die Position des eigenen Fahrzeugs und die Positionen benachbarter Fahrzeuge. Durch die Verwendung einer Stereokamera ist sowohl eine Objekterkennung als auch eine vergleichsweise exakte Entfernungsmessung ohne die Verwendung von zusätzlichen Entfernungssensoren möglich. Weiterhin wird ein Fahrzeug-zu-Fahrzeug-Kommunikationssystem offenbart, welches die vom eigenen Fahrzeug erfassten Umgebungsdaten an benachbarte Fahrzeuge übermittelt, so dass diese für sie selbst nicht sichtbare Objekte erfassen können. Zu jedem übermittelten Objekt gibt es eine Anzahl von Attributen, die entweder mittels der Sensorik bestimmt werden oder aus einer Look-Up-Tabelle abgerufen werden. Das Fahrzeug-zu-Fahrzeug-Kommunikationssystem übermittelt außerdem Fahrzeugparameter des eigenen Fahrzeugs wie z.B. die Fahrzeuglänge, die Fahrzeugbreite und den Fahrzeugtyp.

Die DE 10 2009 012 917 A1 offenbart in diesem Zusammenhang eine in ein Fahrzeug einbaubare Hinderniserkennungsvorrichtung, welche eine Kamera umfasst. Die Hinderniserkennungsvorrichtung verarbeitet sich ergebende Bilddaten, um Objekte als mögliche Hindernisse zu erkennen. Ein Größenwert, beispielsweise der Abstand von zwei Hecklampen, gesendet von einem vorausfahrenden Fahrzeug, und ein entsprechender Größenwert, wie er in einem von der Kamera aufgenommenen Bild gemessen wird, werden verwendet, um den Abstand zu dem vorausfahrenden Fahrzeug zu berechnen. Dieser Wert wird zusammen mit dem Höhenwert, der von dem vorausfahrenden Fahrzeug gesendet wird und einem entsprechenden Höhenwert, der in dem aufgenommenen Bild gemessen wird, verwendet, um eine relative Höhendifferenz zwischen den Fahrzeugen zu berechnen, welche dann wiederum verwendet wird, um zwischen erkannten Obaufgenommenen Bild gemessen wird, verwendet, um eine relative Höhendifferenz zwischen den Fahrzeugen zu berechnen, welche dann wiederum verwendet wird, um zwischen erkannten Objekten zu unterscheiden, welche tatsächliche Hindernisse darstellen und Objekten, welche keine Hindernisse sind, beispielsweise Fahrbahnmarkierungen. Zusätzlich wird gemäße der DE 10 2009 012 917 A1 eine Lage eines Hindernisses erfasst.

Die DE 10 2008 042631 A1 beschreibt ein Verfahren und eine Vorrichtung zur Abstandsermittlung bei einem monokularen Videoassistenzsystem. Das Verfahren weist folgende Schritte auf: Ermitteln eines ersten Abstandes eines Objektes, basierend auf der vertikalen Kamerabildposition des Objektes und auf einem Fahrbahnoberflächenmodell; Ermitteln einer Kamerabildbreite des Objektes; Ermitteln einer gefilterten Breite des Objektes, basierend auf dem ersten Abstand, der Kamerabildbreite und einer Brennweite eines Okulars des monokularen Videoassistenzsystems; und Ermitteln eines zweiten Abstandes des Objektes, basierend auf der gefilterten Breite, der Kamerabildbreite und der Brennweite eines Okulars des monokularen Videoassistenzsysstems.

Aus der WO 2010/007392 A1 ist ein Verfahren zur Abstandbestimmung eines nachfolgenden Fahrzeugs zu einem Vorausfahrzeug bekannt. Dazu wird das Nummernschild des Vorausfahrzeugs vom nachfolgenden Fahrzeug optisch erfasst und das erfasste Bild wird verarbeitet. Das gemäß der WO 2010/007392 A1 vorgeschlagene Verfahren umfasst die Schritte: Bildverarbeitung des erfassten Bilds um das Nummernschild zu erkennen und damit das Vorausfahrzeug zu identifizieren sowie die Höhe der Buchstaben bzw. Ziffern im Nummernschild zu erkennen; anschließend wird die Entfernung zum Vorausfahrzeug anhand der Höhe der erkannten der Buchstaben bzw. Ziffern im Nummernschild ermittelt.

Die DE 10 2006 005 512 A1 offenbart ein System zur Bestimmung der Entfernung und der Lateralposition eines Fahrzeugs. Das System umfasst eine Kamera und einen Prozessor. Die Kamera ist für das Betrachten eines Bereichs von Interesse konfiguriert, in dem sich ein Fahrzeug befindet, und erzeugt ein elektronisches Abbild des Bereichs. Der Prozessor steht mit der Kamera zum Empfangen des elektronischen Abbilds in elektrischer Kommunikation. Der Prozessor analysiert das elektronische Abbild durch Identifizierung einer Reihe von Fenstern innerhalb des Abbilds, wobei jedes Fenster Merkmalen des Fahrzeugs bei einer anderen Zielentfernung entspricht. Zum Beispiel erscheint aus der Perspektive der Kamera das Fahrzeug größer, wenn es sich näher zur Kamera befindet, als wenn es weiter von der Kamera entfernt ist. Dementsprechend ist jedes Fenster proportional zum Fahrzeug bemessen, wie es bei jeder Zielentfernung erscheinen würde. Der Prozessor bewertet die Merkmale im elektronischen Abbild innerhalb jedes Fensters, um das Fahrzeug zu identifizieren. Es wird eine Wertigkeit bestimmt, die auf die Wahrscheinlichkeit hinweist, dass bestimmte Merkmale des elektronischen Abbilds tatsächlich dem Fahrzeug entsprechen und dass sich das Fahrzeug in der Zielentfernung für diese Fenster befindet.

Aus der Veröffentlichung "Towards All Around Automatic Visual Obstacle Sensing for Cars" von M. E. Brauckmann et. al., 19941024; 19941024 - 19941026, 24.10. 1994, Seiten 79-84, XP010258310, schließlich ist ein Verfahren zur automatischen optischen Hinderniserkennung für Fahrzeuge bekannt. Dazu werden mittels einer Kamera Bilder des Umfelds des Fahrzeugs erfasst und ausgewertet. Die Hinderniserkennung scheint sich dabei auf Fahrzeuge als Hindernisse zu beschränken. Das vorgestellte Verfahren bzw. der verwendete Algorithmus eignet sich besonders zur Erkennung von Vorderseiten und Rückseiten von Fahrzeugen. Weiterhin wird die Der Nachteil dieser aus dem Stand der Technik bekannten Vorrichtungen und Verfahren besteht darin, dass zur präzisen Entfernungsmessung stets eigene Sensoren wie Radarsensoren, Lidarsensoren oder eine Stereokamera benötigt werden. Diese Sensoren sind jedoch mit zusätzlichem Kostenaufwand verbunden. Sofern eine Entfernungsbestimmung gemäß dem Stand der Technik mittels des Vergleichs von GPS-Positionsdaten vorgenommen wird, ist die ermittelte Entfernung nur sehr ungenau, da die zur Positionsbestimmung verwendeten globalen Navigationssatellitensysteme stets einer gewissen Ortstoleranz unterliegen. Auch die Verwendung einer Monokamera zum Schätzen einer Entfernung liefert nur sehr ungenaue Daten, welche für sicherheitsrelevante Anwendungen wie z.B. Bremseneingriffe nicht geeignet sind.

Die Aufgabe der vorliegenden Erfindung ist es daher, ein Verfahren und ein System vorzuschlagen, welche ohne die Verwendung gesonderter Entfernungssensoren eine zuverlässige und im Wesentlichen exakte Entfernungsmessung zu einem Zielobjekt ermöglichen.

Diese Aufgabe wird erfindungsgemäß durch das Abstandsbestimmungsverfahren gemäß Anspruch 1 und das Abstandsbestimmungssystem gemäß Anspruch 17 gelöst.

Der Vorteil dieses Verfahrens ist, dass zur Abstandsbestimmung auf eine direkt von der Kamera erfasste Information, nämlich die räumliche Erstreckung des Objekts auf dem Lichtsensor zurückgegriffen wird. Somit wird kein gesonderter Abstandsensor wie beispielsweise ein Radar- oder Lidarsensor benötigt. Da eine Vielzahl von aktuellen Fahrzeugen ohnehin mit einem Kamerasensor ausgerüstet ist, kann durch das erfindungsgemäße Verfahren zur Abstandsbestimmung ohne zusätzlichen Kosten- und Herstellungsaufwand eine Vielzahl von Fahrerassistenzsystemen, wie z.B. eine intelligente Geschwindigkeits- und Abstandskontrolle, implementiert werden. Es ist vorgesehen, dass die Kamerainformation, welche die räumliche Erstreckung des vom Zielobjekt auf einem Lichtsensor im Kamerasensor bedeckten Bereichs umfasst, mit einer Information über die tatsächliche räumliche Erstreckung des Zielobjekts verknüpft wird. Durch die Verknüpfung der Erstreckung auf dem Lichtsensor mit einer Information über die tatsächliche Erstreckung kann auf einfache Weise mittels geometrischer Zusammenhänge der Abstand des Kamerasensors zum Zielobjekt berechnet werden.

Weiterhin ist es bevorzugt, dass der Kamerasensor ein Monokamerasensor ist. Da zur erfindungsgemäßen Abstandsbestimmung ausschließlich eine Kamerainformation über die räumliche Erstreckung auf dem Lichtsensor benötigt wird, ist keine zweite Kamera, wie in einem Stereokamerasensor, notwendig. Eine an sich bekannte, aber vergleichsweise umständliche Abstandsbestimmung mittels des Abgleichs der Bilder zweier Einzelkameras wie in einem Stereokamerasensor wird somit vermieden. Die Verwendung eines Monokamerasensors anstelle eines Stereokamerasensors reduziert zudem den Herstellungsaufwand und damit die Produktionskosten.

Gemäß einer weiteren bevorzugten Ausführungsform der Erfindung ist es vorgesehen, dass der Kamerasensor ein Stereokamerasensor ist. Das erfindungsgemäße Verfahren kann ohne zusätzlichen Aufwand auch in einem Stereokamerasensor durchgeführt werden. So ist es etwa denkbar, dass ein an sich bekanntes Verfahren zur Abstandbestimmung mittels des Stereokamerasensors ausgeführt und mittels des erfindungsgemäßen Verfahrens validiert wird und umgekehrt.

Gemäß einer weiteren bevorzugten Ausführungsform der Erfindung ist es vorgesehen, dass die Kamerainformation die räumliche Erstreckung des vom Zielobjekt auf dem Lichtsensor im Kamerasensor bedeckten Bereichs entlang einer Horizontalen umfasst. Die Abstandsbestimmung wird somit über die Breite des Zielobjekts durchgeführt, was den Vorteil mit sich bringt, dass in der Regel, sofern das Zielobjekt beispielsweise ein PKW ist, die in Fahrtrichtung größte erfassbare Ausdehnung zur Abstandsbestimmung genutzt wird. Die zwangsläufig mit jeder Messung einer physikalischen Größe einhergehende relative Ungenauigkeit ist damit besonders gering.

Außerdem ist es vorteilhaft, dass die Kamerainformation die räumliche Erstreckung des vom Zielobjekt auf dem Lichtsensor im Kamerasensor bedeckten Bereichs entlang einer Vertikalen umfasst. In diesem Fall wird die Abstandsbestimmung zusätzlich oder alternativ über die Höhe des Zielobjekts durchgeführt. Sofern es sich beim Zielobjekt um einen LKW handelt, dessen räumliche Höhe in der Regel größer als seine räumliche Breite ist, kann somit eine noch genauere Abstandsbestimmung durchgeführt werden.

Weiterhin ist es bevorzugt, dass die Kamerainformation eine Fläche des vom Zielobjekt auf dem Lichtsensor im Kamerasensor bedeckten Bereichs umfasst. Die auf dem Lichtsensor bedeckte Fläche ist in der Regel leicht bestimmbar, beispielsweise durch Abzählen der bedeckten Sensorzellen bei einem CCD-Sensor. Die bedeckte Fläche liefert eine zusätzliche Information über das Zielobjekt, welche z.B. eine Überprüfung des mittels der Breite des Zielobjekts und/oder der Höhe des Zielobjekts bestimmten Abstands erlaubt. Somit ist eine Erfassung und Validierung der Abstandsinformation über ein und denselben Sensor möglich. Nach der Erfindung ist es vorgesehen, dass die Information über die tatsächliche räumliche Erstreckung des Zielobjekts die räumliche Erstreckung entlang der Horizontalen und/oder entlang der Vertikalen und/oder die Querschnittsfläche des Zielobjekts umfasst. Wie bereits beschrieben, erlaubt die Verknüpfung der Informationen über die Erstreckungen der im Kamerasensor bedeckten Bereiche mit den tatsächlichen räumlichen Erstreckungen des Zielobjekts mittels geometrischer Zusammenhänge auf einfache Art und Weise eine Bestimmung des Abstands zwischen Kamerasensor und Zielobjekt. Je mehr Daten über tatsächliche räumliche Erstreckungen vorliegen und je mehr räumliche Erstreckungen des bedeckten Bereichs auf dem Lichtsensor zu Abstandsbestimmung genutzt werden, desto genauer und zuverlässiger kann das erfindungsgemäße Verfahren durchgeführt werden.

Weiterhin ist es vorteilhaft, dass der Lichtsensor ein CCD-Sensorchip (Charge Coupled Device) oder ein CMOS-Sensorchip (Complementary Metal Oxide Semiconductor) ist. Somit wird es auf einfache Weise und ohne zusätzlichen Aufwand möglich, den Lichtsensor elektronisch auszulesen. Besonders im Hinblick auf die elektronische Verarbeitung der vom Sensor erfassten Bildinformationen ist dies von Vorteil.

Insbesondere ist es vorteilhaft, dass die Kamerainformation die Anzahl der vom Zielobjekt auf dem CCD-Sensorchip (Charge Coupled Device)oder dem CMOS-Sensorchip (Complementary Metal Oxide Semiconductor) bedeckten Detektorzeilen und/oder die Anzahl der vom Zielobjekt im Kamerasensor auf dem Lichtsensorchip bedeckten Detektorspalten und/oder die Anzahl der insgesamt bedeckten Detektorzellen umfasst. Bei einem CCD-Sensorchip oder einem CMOS-Sensorchip kann ein Maß für die Breite, die Höhe und die Fläche des bedeckten Bereichs auf einfache Weise durch Abzählen der Detektorspalten, Detektorzeilen bzw. der einzelnen Detektorzellen erfasst werden.

In einer weiteren bevorzugten Ausführungsform der Erfindung ist es vorgesehen, dass aus den räumlichen Erstreckungen des vom Zielobjekt auf dem Lichtsensor bedeckten Bereichs ein Verhältnis der Erstreckungen entlang der Horizontalen und der Vertikalen und/oder der insgesamt bedeckten Fläche gebildet wird. Dies erlaubt das Bestimmen von charakteristischen Erstreckungsverhältnissen für unterschiedliche Arten von Zielobjekten und somit einen weiteren Zugewinn an Informationen über das Zielobjekt

In einer weiteren besonders bevorzugten Ausführungsform der Erfindung ist es vorgesehen, dass mittels des Verhältnisses der Erstreckungen das Zielobjekt einer Objektklasse zugeordnet wird. Die Zuordnung zu einer Objektklasse erlaubt eine nähere Identifizierung des Zielobjekts und damit einhergehend die Möglichkeit, auf für diese Objektklasse charakteristische, tatsächliche räumliche Erstreckungen zur Berechnung des Abstands zurückzugreifen, sofern diese nicht direkt vom Zielobjekt übermittelt werden.

Vorzugsweise zeichnet sich das Verfahren dadurch aus, dass die Objektklasse das Zielobjekt als einer oder mehreren der folgenden Klassen zugehörig klassifiziert: Fahrzeugmarke, Fahrzeugmodell, Fußgänger oder Fahrradfahrer. Dies erlaubt eine im Wesentlichen exakte Identifizierung bzw. Klassifizierung des Zielobjekts und damit verbunden eine im Wesentlichen individuelle Zuordnung zu einer Objektklasse. Somit können auf im Wesentlichen individuelle tatsächliche räumliche Erstreckungen des Zielobjekts zurückgegriffen werden, sofern diese nicht direkt vom Zielobjekt übermittelt werden.

Weiterhin ist es vorgesehen, dass eine zusätzliche Kamerainformation eine Bewegungsrichtung des Zielobjekts relativ zum Kamerasensor umfasst. Die Erfassung der Bewegungsrichtung relativ zum Kamerasensor erlaubt eine Bestimmung der räumlichen Orientierung des Zielobjekts relativ zum Kamerasensor. Die Information über die räumliche Orientierung relativ zum Kamerasensor bietet den Vorteil, dass eine im Lichtsensor detektierte Breite bei nicht identischer Orientierung von Zielobjekt und Kamerasensor zurückgerechnet werden kann auf die Breite bei identischer Orientierung. Somit kann etwa auch in einer Kurve, in der das Zielobjekt aufgrund seiner anderen Position in der Kurve eine andere Orientierung als das nachfolgende Fahrzeug mit dem Kamerasensor aufweist, die der tatsächlichen räumlichen Breite entsprechende Bedeckung im Lichtsensor ermittelt werden.

Weiterhin ist es bevorzugt, dass eine zusätzliche Information über das Zielobjekt die Bewegungsrichtung des Zielobjekts relativ zum Kamerasensor und/oder eine Positionsinformation des Zielobjekts umfasst, wobei die Positionsinformation insbesondere auf einem globalen Navigationssatellitensystem basiert. Die zusätzliche Information kann dabei beispielsweise direkt vom Zielobjekt an das abstandsbestimmende Fahrzeug übermittelt werden. Somit ergibt sich der Vorteil, dass unabhängig vom Erkennen der Bewegungsrichtung des Zielobjekts durch den Kamerasensor des abstandsbestimmenden Fahrzeugs die Orientierung des Zielobjekts bekannt ist. Dies führt zu dem bereits beschriebenen Vorteil, dass eine im Lichtsensor detektierte Breite des Zielobjekts bei nicht identischer Orientierung von Zielobjekt und Kamerasensor zurückgerechnet werden kann auf die Breite bei identischer Orientierung. Die Positionsinformation über das Zielobjekt kann ebenfalls vom Zielobjekt übermittelt werden und ermöglicht eine Überprüfung der mittels des erfindungsgemäßen Verfahrens bestimmten Abstands, wobei eine exakte Überprüfung nicht möglich ist, da die Positionsbestimmung mittels globaler Navigationssatellitensysteme im Vergleich zum erfindungsgemäßen Verfahren mit einer vergleichsweise großen Ungenauigkeit behaftet ist. Das Erkennen eines im Bereich mehrerer Meter und somit sicherheitsrelevant falsch bestimmten Abstands ist dennoch möglich.

Bevorzugt ist es vorgesehen, dass die Information über die tatsächliche räumliche Erstreckung des Zielobjekts und/oder die zusätzliche Information über das Zielobjekt mittels Fahrzeug-zu-X-Kommunikation erfasst wird. Daraus ergibt sich der Vorteil, dass jedes Zielobjekt einen individuellen und daher optimal angepassten Datensatz tatsächlicher räumlicher Erstreckungen an das abstandsbestimmende Fahrzeug übertragen kann, wodurch eine präzise und zuverlässige Abstandsbestimmung möglich wird, da die zur Abstandsbestimmung notwendigen Ausgangsdaten das Zielobjekt exakt beschreiben.

In einer weiteren besonders bevorzugten Ausführungsform der Erfindung ist es vorgesehen, dass die Fahrzeug-zu-X-Kommunikation auf Basis mindestens einer der folgenden Verbindungsarten Informationen austauscht:
- WLAN-Verbindung, insbesondere nach IEEE 802.11,
- ISM-Verbindung (Industrial, Scientific, Medical Band),
- Infrarotverbindung und
- Mobilfunkverbindung.

Diese Verbindungsarten bieten dabei unterschiedliche Vor- und Nachteile, je nach Gattung und Wellenlänge. WLAN-Verbindungen ermöglichen z.B. eine hohe Datenübertragungsrate. Eine Datenübertragung um ein Hindernis herum ist jedoch nur begrenzt möglich. ISM-Verbindungen hingegen bieten zwar eine geringere Datenübertragungsrate, erlauben es aber, auch Daten um ein Sichthindernis herum zu übertragen. Infrarotverbindungen wiederum bieten eine geringe Datenübertragungsrate, die bei fehlender Sichtverbindung zudem stark eingeschränkt wird. Mobilfunkverbindungen schließlich werden durch Sichthindernisse nicht beeinträchtigt und bieten eine gute Datenübertragungsrate. Dafür ist der Verbindungsaufbau vergleichsweise langsam. Durch die Kombination und gleichzeitige bzw. parallele Nutzung mehrerer dieser Verbindungsarten ergeben sich weitere Vorteile, da so die Nachteile einzelner Verbindungsarten ausgeglichen werden können.

Außerdem ist es vorteilhaft, dass der mittels der Kamerainformation zu einem Zielobjekt bestimmte Abstand mindestens einem Fahrerassistenzsystem zur Verfügung gestellt wird. Somit können Fahrerassistenzsysteme, welche beispielsweise Bremseneingriffe durchführen oder mittels Übernahme der Motorsteuerung einen Abstand zum Vorausfahrzeug einregeln, ohne zusätzliche Abstandssensoren mit den zu ihrer Ausführung notwendigen Abstandsinformationen versorgt werden. Ebenso ist es auch denkbar, die Abstandsinformation anderen Fahrerassistenzsystemen zur Verfügung zu stellen, welche ggf. bei Unterschreiten eines sicherheitskritischen Mindestabstands eine Warnung an den Fahrer ausgeben. Diese beispielhafte Aufzählung von Fahrerassistenzsystemen ist nicht vollständig und kann beliebig erweitert werden, da der ermittelte Abstand jedem Fahrerassistenzsystem und jedem Fahrzeugsystem zur Verfügung gestellt werden kann.

Zweckmäßigerweise ist es vorgesehen, dass die Information über die tatsächliche räumliche Erstreckung des Zielobjekts und/oder die zusätzliche Information über das Zielobjekt mittels eines Vergleichs mit der Kamerainformation und/oder der zusätzlichen Kamerainformation validiert wird. Somit ergibt sich der Vorteil, dass vor der Verarbeitung der beispielsweise mittels Fahrzeug-zu-X-Kommunikation erfassten Informationen bzw. zusätzlichen Informationen eine Validierung mittels des Kamerasensors durchgeführt werden kann. Da der Kamerasensor gemäß dem erfindungsgemäßen Verfahren ohnehin zur Abstandsbestimmung verwendet wird, ist damit eine Validierung ohne das Miteinbeziehen weiterer Sensoren möglich. Da auf dem Lichtsensor keine absoluten tatsächlichen Erstreckungen gemessen werden können, kann beispielsweise das Verhältnis der Erstreckungen auf dem Lichtsensor mit dem Verhältnis der vom Zielobjekt übertragenen tatsächlichen räumlichen Erstreckungen verglichen werden. Bei Übereinstimmung der Verhältnisse der Erstreckungen gilt die Information über die tatsächliche räumliche Erstreckung des Zielobjekts als validiert. Die Bewegungsrichtung des Zielobjekts relativ zum Kamerasensor kann von diesem hingegen direkt erfasst werden. Somit ist vorteilhafterweise auch eine Validierung der zusätzlichen Informationen über das Zielobjekt möglich.

Außerdem ist es vorteilhaft, dass ein Zielobjekterkennungsalgorithmus des Kamerasensors eine Erkennungsschwelle herabsetzt, wenn das Zielobjekt bereits mittels der Information über die tatsächliche räumliche Erstreckung des Zielobjekts einer Objektklasse zugeordnet wurde. Hier zeigt sich ein weiterer Vorteil des erfindungsgemäßen Verfahrens, da die Informationen über das Zielobjekt dazu genutzt werden können, die Objekterkennung durch den Kamerasensor zu beschleunigen. Somit ergibt sich eine insgesamt beschleunigte Umfelderfassung durch ein entsprechendes Fahrerassistenzsystem.

Die vorliegende Erfindung betrifft weiter ein Abstandsbestimmungssystem, nach Anspruch 17. Es ist bevorzugt, dass auf der elektronischen Speichereinrichtung eine Objektklassenmatrix gespeichert ist, welche Verhältnisse von Erstreckungen entlang der Horizontalen und der Vertikalen und/oder der insgesamt bedeckten Fläche einer Vielzahl unterschiedlicher Objektklassen enthält. Somit verfügt das erfindungsgemäße System über die Möglichkeit, mittels eines Abgleichs der Verhältnisse der Erstreckungen der auf dem Lichtsensor bedeckten Bereiche mit den auf der elektronischen Speichereinrichtung gespeicherten Verhältnissen von Erstreckungen ein Zielobjekt einer Objektklasse zuzuordnen. Die Zuordnung zu einer Objektklasse ist damit unabhängig von einer ggf. über Fahrzeug-zu-X-Kommunikation empfangenen Objektklasse oder von über Fahrzeug-zu-X-Kommunikation empfangenen tatsächlichen Erstreckungen. Es ergibt sich der Vorteil, dass die Abstandsbestimmung auch dann durchgeführt werden kann, wenn das Zielobjekt entweder keine zur Abstandsbestimmung notwendigen Informationen überträgt oder das abstandsbestimmende Fahrzeug keine entsprechenden Informationen empfängt, beispielsweise weil es keine Fahrzeug-zu-X-Kommunikationsmittel besitzt.

Weitere bevorzugte Ausführungsformen ergeben sich aus den Unteransprüchen und den nachfolgenden Beschreibungen von Ausführungsbeispielen anhand von Figuren.

Es zeigen
- Fig. 1: eine räumliche Erstreckung des vom Zielobjekt auf dem Lichtsensor bedeckten Bereichs, die tatsächliche Erstreckung des Zielobjekts und den zugehörigen Strahlengang,
- Fig. 2: einen Monokamerasensor, der das Zielobjekt anhand des Verhältnisses seiner räumlichen Erstreckungen klassifiziert und
- Fig. 3: eine Verkehrssituation, in der das erfindungsgemäße Abstandsbestimmungsverfahren und Abstandsbestimmungssystem zum Einsatz kommen.

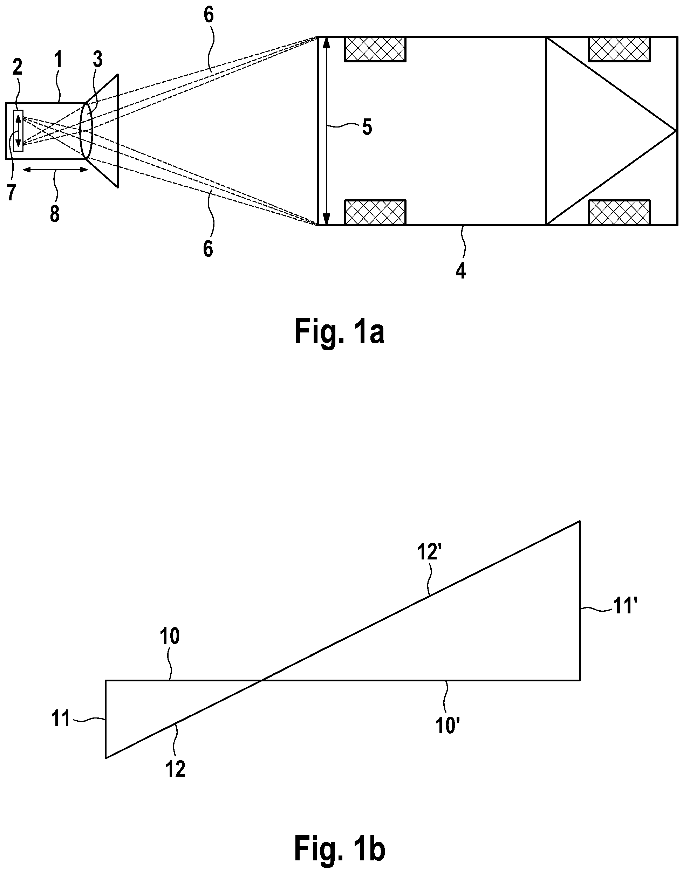

In Fig. 1a ist eine beispielhafte und schematische Ausführungsform des erfindungsgemäßen Verfahrens zu sehen. Abgebildet ist Kamerasensor 1, welcher Lichtsensor 2 und optische Linse 3 umfasst. Lichtsensor 2 und optische Linse 3 sind im Abstand 8 voneinander angeordnet. Im Sichtfeld von Kamerasensor 1 befindet sich Fahrzeug 4. Fahrzeug 4 ist derart orientiert, dass Kamerasensor 1 die Rückansicht von Fahrzeug 4 erfasst. Die Rückansicht von Fahrzeug 4 besitzt in der Horizontalen eine räumliche Erstreckung 5, was der Fahrzeugbreite entspricht. Über Strahlengang 6 wird auf Lichtsensor 2 eine Erstreckung 7 erzeugt, welche die Breite des bedeckten Bereichs auf Lichtsensor 2 angibt. Beispielsgemäß ist räumliche Erstreckung 5 von Fahrzeug 4 bekannt. Abstand 8 und Erstreckung 7 des von Fahrzeug 4 auf Lichtsensor 2 bedeckten Bereichs sind ebenfalls bekannt bzw. erfassbar. Somit wird beispielsgemäß mittels eines einfachen geometrischen Zusammenhangs der Abstand von Fahrzeug 4 zu Kamerasensor 1 ermittelt. Der beispielsgemäße geometrische Zusammenhang ist in Fig. 1b dargestellt. Länge 10 entspricht Abstand 8 in Fig. 1a, Länge 10' entspricht dem Abstand zwischen Kamerasensor 1 und Fahrzeug 4. Länge 11 entspricht Erstreckung 7 auf Lichtsensor 2 und Länge 11' entspricht Fahrzeugbreite 5. Längen 12 und 12' entsprechen Strahlengang 6. Mittels des Verhältnisses der Längen 10 zu 10' und 11 zu 11' wird nun beispielsgemäß Abstand 10' von Kamerasensor 1 zu Fahrzeug 4 bestimmt.

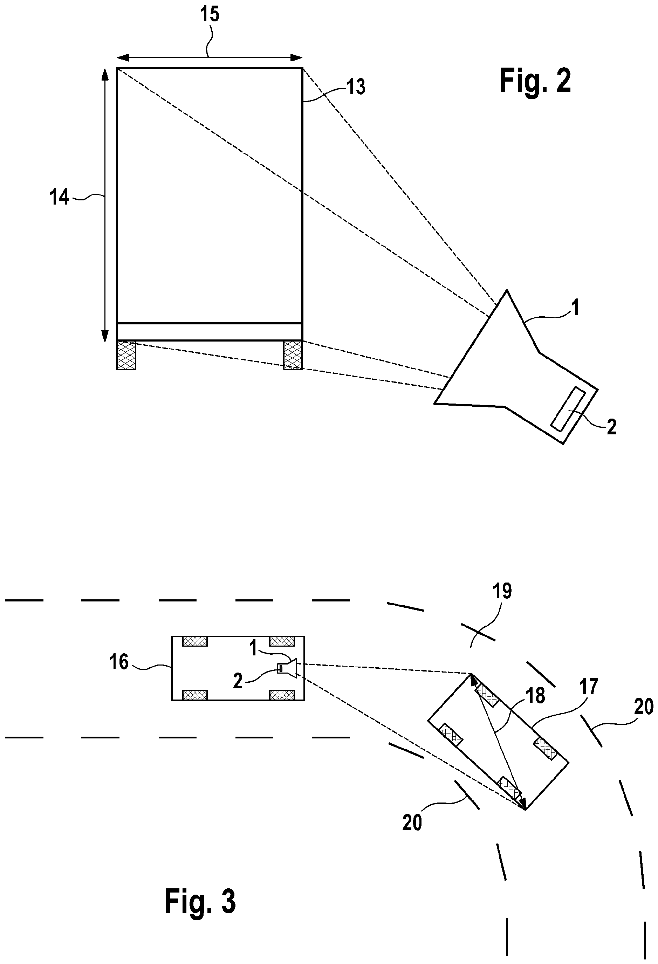

Fig. 2 zeigt Kamerasensor 1 mit Lichtsensor 2. In diesem Ausführungsbeispiel erfasst Kamerasensor 1 die Rückansicht von Fahrzeug 13. Räumliche Erstreckungen 14 und 15 längs der Horizontalen und der Vertikalen werden auf Lichtsensor 2 proportional abgebildet. Beispielsgemäß wird das Verhältnis der auf Lichtsensor 2 proportional abgebildeten Erstreckungen 14 und 15 gebildet. Aus einer Objektklassenmatrix auf einem elektronischen Speicher wird nun ein Verhältniswert gesucht, welcher dem aus Erstreckung 14 und Erstreckung 15 gebildeten Verhältniswert entspricht. Es ergibt sich eine Übereinstimmung mit dem Verhältniswert für einen LKW. Fahrzeug 13 wird somit aufgrund des Verhältnisses seiner Erstreckungen 14 und 15 von Kamerasensor 1 als LKW erkannt.

Das in Fig. 3 dargestellte Ausführungsbeispiel zeigt Fahrzeug 16, welches auf Fahrbahnspur 19 beabstandet zu Fahrzeug 17 folgt. Beide Fahrzeuge verfügen beispielsgemäß über Fahrzeug-zu-x-Kommunikationseinrichtungen. Da Fahrbahnspur 19 eine Kurve aufweist, sind Fahrzeuge 16 und 17 in unterschiedliche Richtungen orientiert. Kamerasensor 1 erfasst räumliche Erstreckung 18 von Fahrzeug 17. Aufgrund der unterschiedlichen Orientierungen der Fahrzeuge entspricht Erstreckung 18 jedoch nicht der Breite von Fahrzeug 17, sondern einer Diagonalen von Fahrzeug 17. Mittels der Fahrzeug-zu-x-Kommunikationseinrichtungen empfängt Fahrzeug 16 unter anderem die tatsächliche Länge und Breite von Fahrzeug 17. Eine alleine aufgrund der tatsächlichen Erstreckungen von Fahrzeug 17 und des auf Lichtsensor 2 bedeckten Bereichs durchgeführte Abstandsermittlung würde zu einem falsch ermittelten Abstand führen, da der auf Lichtsensor 2 bedeckte Bereich nicht der Breite von Fahrzeug 17 sondern dessen Diagonale 18 entspricht. Um derartige Fehler bei der erfindungsgemäßen Abstandsbestimmung zu vermeiden, übermittelt Fahrzeug 17 beispielsgemäß auch seine Bewegungsrichtung. Durch Vergleich der Bewegungsrichtung von Fahrzeug 17 mit der eigenen Bewegungsrichtung von Fahrzeug 16 wird in diesem Ausführungsbeispiel nun von Fahrzeug 16 zunächst die relative Orientierung beider Fahrzeuge zueinander bestimmt. Mit Kenntnis der relativen Orientierung wird nun von Kamerasensor 1 erfasste Diagonale 18 rückgerechnet auf eine der Fahrzeugbreite von Fahrzeug 17 entsprechende Erstreckung. Die rückgerechnete Erstreckung erlaubt die Bestimmung des tatsächlichen Abstands zwischen Fahrzeug 16 und Fahrzeug 17.

In einem ebenfalls in Fig. 3 dargestellten Ausführungsbeispiel wird anhand der relativen Orientierung beider Fahrzeuge und von Kamerasensor 1 erfasster Diagonalen 18 auf die Erstreckung der Fahrzeuglänge auf Lichtsensor 2 rückgerechnet. Somit wird der Abstand beider Fahrzeuge beispielsgemäß über die Länge und nicht über die Breite von Fahrzeug 17 bestimmt.

Gemäß einem weiteren in Fig. 3 dargestellten Ausführungsbeispiel ist nur Fahrzeuge 16 mit einer Fahrzeug-zu-x-Kommunikationseinrichtung versehen, nicht jedoch Fahrzeug 17. Fahrzeug 16 empfängt somit weder Informationen über die Orientierung von Fahrzeug 17 noch Informationen über die tatsächlichen räumlichen Erstreckungen von Fahrzeug 17. Kamerasensor 1 erkennt jedoch anhand von Fahrspurmarkierungen 20, dass Fahrzeug 17 sich in einer Kurve befindet. Beispielsgemäß wird die relative Orientierung von Fahrzeug 17 zu Fahrzeug 16 mittels der Ausrichtung von Fahrbahnmarkierungen 20 bestimmt, indem davon ausgegangen wird, dass Fahrzeug 17 Fahrspur 19 folgt. Des Weiteren wird für Fahrzeug 17 ein durchschnittliches Verhältnis von Fahrzeugbreite zu Fahrzeuglänge angenommen, um einen eventuellen Fehler bei der Abstandsbestimmung im Mittel möglichst gering zu halten. Somit liegen in Fahrzeug 16 ausreichend Informationen vor, um mittels des von Diagonaler 18 auf Lichtsensor 2 bedeckten Bereichs den Abstand zu Fahrzeug 17 ermitteln zu können. Sobald beide Fahrzeuge wieder in dieselbe Richtung fahren, also identisch orientiert sind, kann Kamerasensor 1 direkt die Fahrzeugbreite von Fahrzeug 17 erfassen. Nachdem die Breite von Fahrzeug 17 einmal erfasst wurde, kann diese Information in späteren Kurven zur exakten Abstandsbestimmung genutzt werden, ohne auf Durchschnittswerte von Verhältnissen von Fahrzeugbreiten zu Fahrzeuglängen zurückgreifen zu müssen.

## Patentansprüche

1. Abstandsbestimmungsverfahren mittels eines Kamerasensors (1), wobei auf Basis einer Kamerainformation ein Abstand des Kamerasensors (1) zu einem Zielobjekt (4, 13, 17) bestimmt wird,
wobei die Kamerainformation eine räumliche Erstreckung (7) des vom Zielobjekt (4, 13, 17) auf einem Lichtsensor (2) im Kamerasensor (1) bedeckten Bereichs umfasst,
wobei die Kamerainformation, welche die räumliche Erstreckung (7) des vom Zielobjekt (4, 13, 17) auf einem Lichtsensor (2) im Kamerasensor (1) bedeckten Bereichs umfasst, mit einer Information über die tatsächliche räumliche Erstreckung (5, 14, 15, 18) des Zielobjekts (4, 13, 17) verknüpft wird und
wobei die Information über die tatsächliche räumliche Erstreckung (5, 14, 15, 18) des Zielobjekts (4, 13, 17) die räumliche Erstreckung entlang der Horizontalen und/oder entlang der Vertikalen und/oder die Querschnittsfläche des Zielobjekts umfasst,
**dadurch gekennzeichnet,**
**dass** eine zusätzliche Information über das Zielobjekt (4, 13, 17) die Bewegungsrichtung des Zielobjekts (4, 13, 17) relativ zum Kamerasensor umfasst, dass aus der relativen Bewegungsrichtung eine räumliche Orientierung des Zielobjekts (4, 13, 17) relativ zum Kamerasensor bestimmt wird und dass eine im Lichtsensor (2) detektierte Erstreckung (7) bei nicht identischer Orientierung zurückgerechnet wird auf eine Erstreckung (7) bei identischer Orientierung.

2. Verfahren nach Anspruch 1,
**dadurch gekennzeichnet,**
**dass** der Kamerasensor (1) ein Monokamerasensor ist.

3. Verfahren nach Anspruch 1,
**dadurch gekennzeichnet,**
**dass** der Kamerasensor (1) ein Stereokamerasensor ist.

4. Verfahren nach mindestens einem der Ansprüche 1 bis 3,
**dadurch gekennzeichnet,**
**dass** die Kamerainformation die räumliche Erstreckung (7) des vom Zielobjekt (4, 13, 17) auf dem Lichtsensor (2) im Kamerasensor (1) bedeckten Bereichs entlang einer Horizontalen umfasst.

5. Verfahren nach mindestens einem der Ansprüche 1 bis 4,
**dadurch gekennzeichnet,**
**dass** die Kamerainformation die räumliche Erstreckung (7) des vom Zielobjekt (4, 13, 17) auf dem Lichtsensor (2) im Kamerasensor (1) bedeckten Bereichs entlang einer Vertikalen umfasst

6. Verfahren nach mindestens einem der Ansprüche 1 bis 5,
**dadurch gekennzeichnet,**
**dass** die Kamerainformation eine Fläche des vom Zielobjekt (4, 13, 17) auf dem Lichtsensor (2) im Kamerasensor (1) bedeckten Bereichs umfasst.

7. Verfahren nach mindestens einem der Ansprüche 1 bis 6,
**dadurch gekennzeichnet,**
**dass** der Lichtsensor (2) ein CCD-Sensorchip (Charge Coupled Device) oder ein CMOS-Sensorchip (Complementary Metal Oxide Semiconductor) ist.

8. Verfahren nach mindestens einem der Ansprüche 1 bis 7,
**dadurch gekennzeichnet,**
**dass** aus den räumlichen Erstreckungen (7) des vom Zielobjekt (4, 13, 17) auf dem Lichtsensor (2) bedeckten Bereichs ein Verhältnis der Erstreckungen(5, 7, 14, 15, 18) entlang der Horizontalen und der Vertikalen und/oder der insgesamt bedeckten Fläche gebildet wird.

9. Verfahren nach Anspruch 8,
**dadurch gekennzeichnet,**
**dass** mittels des Verhältnisses der Erstreckungen (5, 7, 14, 15, 18) das Zielobjekt einer Objektklasse zugeordnet wird.

10. Verfahren nach Anspruch 9,
**dadurch gekennzeichnet,**
**dass** die Objektklasse das Zielobjekt (4, 13, 17) als einer oder mehreren der folgenden Klassen zugehörig klassifiziert: Fahrzeugmarke, Fahrzeugmodell, Fußgänger oder Fahrradfahrer.

11. Verfahren nach mindestens einem der Ansprüche 1 bis 10,
**dadurch gekennzeichnet,**
**dass** und/oder eine Positionsinformation des Zielobjekts (4, 13, 17) umfasst, wobei die Positionsinformation insbesondere auf einem globalen Navigationssatellitensystem basiert.

12. Verfahren nach mindestens einem der Ansprüche 1 bis 11,
**dadurch gekennzeichnet,**
**dass** die Information über die tatsächliche räumliche Erstreckung (5, 14, 15, 18) des Zielobjekts (4, 13, 17) und/oder die zusätzliche Information über das Zielobjekt (4, 13, 17) mittels Fahrzeug-zu-X-Kommunikation erfasst wird.

13. Verfahren nach Anspruch 1,
**dadurch gekennzeichnet,**
**dass** die Fahrzeug-zu-X-Kommunikation auf Basis mindestens einer der folgenden Verbindungsarten Informationen austauscht:
- WLAN-Verbindung, insbesondere nach IEEE 802.11,
- ISM-Verbindung (Industrial, Scientific, Medical Band),
- Infrarotverbindung und
- Mobilfunkverbindung.

14. Verfahren nach mindestens einem der Ansprüche 1 bis 13,
**dadurch gekennzeichnet,**
**dass** der mittels der Kamerainformation zu einem Zielobjekt (4, 13, 17) bestimmte Abstand (8) mindestens einem Fahrerassistenzsystem zur Verfügung gestellt wird.

15. Verfahren nach mindestens einem der Ansprüche 1 bis 14,
**dadurch gekennzeichnet,**
**dass** die Information über die tatsächliche räumliche Erstreckung (5, 14, 15, 18) des Zielobjekts (4, 13, 17) und/oder die zusätzliche Information über das Zielobjekt (4, 13, 17) mittels eines Vergleichs mit der Kamerainformation validiert wird.

16. Verfahren nach mindestens einem der Ansprüche 1 bis 15,
**dadurch gekennzeichnet,**
**dass** ein Zielobjekterkennungsalgorithmus des Kamerasensors (1) eine Erkennungsschwelle herabsetzt, wenn das Zielobjekt (4, 13, 17) bereits mittels der Information über die tatsächliche räumliche Erstreckung (5, 14, 15, 18) des Zielobjekts (4, 13, 17) einer Objektklasse zugeordnet wurde.

17. Abstandsbestimmungssystem, welches dazu ausgebildet ist, einen Abstand eines Kamerasensors (1) zu einem Zielobjekt zu bestimmen, umfassend den Kamerasensor (1) und eine Fahrzeug-zu-X-Kommunikationseinrichtung und/oder eine elektronische Speichereinrichtung,
wobei der Kamerasensor (1) dazu ausgebildet ist, eine Kamerainformation zu erfassen, welche eine räumliche Erstreckung (7) des vom Zielobjekt (4, 13, 17) auf einem Lichtsensor (2) im Kamerasensor (1) bedeckten Bereichs umfasst, wobei Abstandsbestimmungssystem dazu ausgebildet ist, die Kamerainformation, welche die räumliche Erstreckung (7) des vom Zielobjekt (4, 13, 17) auf einem Lichtsensor (2) im Kamerasensor (1) bedeckten Bereichs umfasst, mit einer Information über die tatsächliche räumliche Erstreckung (5, 14, 15, 18) des Zielobjekts (4, 13, 17) zu verknüpfen und
wobei die Information über die tatsächliche räumliche Erstreckung (5, 14, 15, 18) des Zielobjekts (4, 13, 17) die räumliche Erstreckung entlang der Horizontalen und/oder entlang der Vertikalen und/oder die Querschnittsfläche des Zielobjekts (4, 13, 17) umfasst,
**dadurch gekennzeichnet,**
**dass** eine zusätzliche Information über das Zielobjekt (4, 13, 17) die Bewegungsrichtung des Zielobjekts (4, 13, 17) relativ zum Kamerasensor (1) umfasst und dass das Abstandsbestimmungssystem dazu ausgebildet ist, ein Verfahren nach mindestens einem der Ansprüche 1 bis 16 durchzuführen.

18. System nach Anspruch 17,
**dadurch gekennzeichnet,**
**dass** auf der elektronischen Speichereinrichtung eine Objektklassenmatrix gespeichert ist, welche Verhältnisse von Erstreckungen (5, 7, 14, 15, 18) entlang der Horizontalen und der Vertikalen und/oder der insgesamt bedeckten Fläche einer Vielzahl unterschiedlicher Objektklassen enthält.

## Claims

1. A method for distance determination by means of a camera sensor (1), wherein a distance of the camera sensor (1) from a target object (4, 13, 17) is determined on the basis of camera information,
wherein the camera information comprises a spatial extent (7) of the region covered by the target object (4, 13, 17) on a photosensor (2) in the camera sensor (1), wherein the camera information, which comprises the spatial extent (7) of the region covered by the target object (4, 13, 17) on a photosensor (2) in the camera sensor (1), is linked to information relating to the actual spatial extent (5, 14, 15, 18) of the target object (4, 13, 17), and wherein the information relating to the actual spatial extent (5, 14, 15, 18) of the target object (4, 13, 17) comprises the spatial extent along the horizontal line and/or along the vertical line and/or the cross-sectional area of the target object,
**characterized in that**
additional information relating to the target object (4, 13, 17) comprises the movement direction of the target object (4, 13, 17) relative to the camera sensor, **in that** a spatial orientation of the target object (4, 13, 17) relative to the camera sensor is determined from the relative movement direction, and **in that** an extent (7) detected in the photosensor (2) in the case of non-identical orientation is back-calculated to an extent (7) in the case of identical orientation.

2. The method according to Claim 1,
**characterized in that**
the camera sensor (1) is a mono camera sensor.

3. The method according to Claim 1,
**characterized in that**
the camera sensor (1) is a stereo camera sensor.

4. The method according to at least one of Claims 1 to 3,
**characterized in that**
the camera information comprises the spatial extent (7) of the region covered by the target object (4, 13, 17) on the photosensor (2) in the camera sensor (1) along a horizontal line.

5. The method according to at least one of Claims 1 to 4,
**characterized in that**
the camera information comprises the spatial extent (7) of the region covered by the target object (4, 13, 17) on the photosensor (2) in the camera sensor (1) along a vertical line.

6. The method according to at least one of Claims 1 to 5,
**characterized in that**
the camera information comprises an area of the region covered by the target object (4, 13, 17) on the photosensor (2) in the camera sensor (1).

7. The method according to at least one of Claims 1 to 6,
**characterized in that**
the photosensor (2) is a CCD sensor chip (Charge Coupled Device) or a CMOS sensor chip (Complementary Metal Oxide Semiconductor).

8. The method according to at least one of Claims 1 to 7,
**characterized in that**
the spatial extents (7) of the region covered by the target object (4, 13, 17) on the photosensor (2) are used to form a ratio of the extents (5, 7, 14, 15, 18) along the horizontal line and the vertical line and/or the total covered area.

9. The method according to Claim 8,
**characterized in that**
the target object is assigned to an object class by means of the ratios of the extents (5, 7, 14, 15, 18).

10. The method according to Claim 9,
**characterized in that**
the object class classifies the target object (4, 13, 17) according to one or more of the following classes: vehicle make, vehicle model, pedestrian or cyclist.

11. The method according to at least one of Claims 1 to 10,
**characterized in that**
and/or comprises position information of the target object (4, 13, 17), wherein the position information is based in particular on a global navigation satellite system.

12. The method according to at least one of Claims 1 to 11,
**characterized in that**
the information relating to the actual spatial extent (5, 14, 15, 18) of the target object (4, 13, 17) and/or the additional information relating to the target object (4, 13, 17) is captured by means of vehicle-to-X communication.

13. The method according to Claim 1,
**characterized in that**
the vehicle-to-X communication exchanges information on the basis of at least one of the following connection types:
- WLAN connection, in particular according to IEEE 802.11,
- ISM connection (Industrial, Scientific and Medical Band),
- Infrared connection
- Mobile radio connection.

14. The method according to at least one of Claims 1 to 13,
**characterized in that**
the distance (8) from a target object (4, 13, 17) determined by means of the camera information is provided to at least one driver assistance system.

15. The method according to at least one of Claims 1 to 14,
**characterized in that**
the information relating to the actual spatial extent (5, 14, 15, 18) of the target object (4, 13, 17) and/or the additional information relating to the target object (4, 13, 17) is validated by means of a comparison with the camera information.

16. The method according to at least one of Claims 1 to 15,
**characterized in that**
a target object recognition algorithm of the camera sensor (1) lowers a recognition threshold when the target object (4, 13, 17) has already been assigned to an object class using the information relating to the actual spatial extent (5, 14, 15, 18) of the target object (4, 13, 17).

17. A system for distance determination, which is designed to determine a distance of a camera sensor (1) from a target object, comprising the camera sensor (1) and a vehicle-to-X communication device and/or an electronic memory device, wherein the camera sensor (1) is designed to recognize camera information which comprises a spatial extent (7) of the region covered by the target object (4, 13, 17) on a photosensor (2) in the camera sensor (1), wherein the system for distance determination is designed to link the camera information, which comprises the spatial extent (7) of the region covered by the target object (4, 13, 17) on a photosensor (2) in the camera sensor (1), to information relating to the actual spatial extent (5, 14, 15, 18) of the target object (4, 13, 17),
and
wherein the information relating to the actual spatial extent (5, 14, 15, 18) of the target object (4, 13, 17) comprises the spatial extent along the horizontal line and/or the along the vertical line and/or the cross-sectional area of the target object (4, 13, 17),
**characterized in that**
additional information relating to the target object (4, 13, 17) comprises the movement direction of the target object (4, 13, 17) relative to the camera sensor (1), and **in that** the system for distance determination is designed to carry out a method according to at least one of Claims 1 to 16.

18. The system according to Claim 17,
**characterized in that**
an object class matrix is stored in the electronic memory device, which object class matrix contains ratios of extents (5, 7, 14, 15, 18) along the horizontal line and the vertical line and/or the total covered area for a plurality of different object classes.

## Revendications

1. Procédé de détermination de distance au moyen d'un
capteur de caméra (1), une distance du capteur de caméra (1) à un objet cible (4, 13, 17) étant déterminée sur la base d'une information de caméra,
l'information de caméra comprenant une étendue spatiale (7) de la zone couverte par l'objet cible (4, 13, 17) sur un capteur de lumière (2) dans le capteur de caméra (1),l'information de caméra, laquelle comprend l'étendue spatiale (7) de la zone couverte par l'objet cible (4, 13, 17) sur un capteur de lumière (2) dans le capteur de caméra (1), étant reliée à une information sur l'étendue spatiale réelle (5, 14, 15, 18) de l'objet cible (4, 13, 17) et
l'information sur l'étendue spatiale réelle (5, 14, 15, 18) de l'objet cible (4, 13, 17) comprenant l'étendue spatiale le long de l'horizontale et/ou le long de la verticale et/ou la section transversale de l'objet cible,
**caractérisé en ce qu'**
une information supplémentaire sur l'objet cible (4, 13, 17) comprend le sens de déplacement de l'objet cible (4, 13, 17) relativement au capteur de caméra, **en ce qu'**une orientation spatiale de l'objet cible (4, 13, 17) relativement au capteur de caméra est déterminée à partir du sens de déplacement relatif et **en ce qu'**une étendue (7) détectée dans le capteur de lumière (2) lorsque l'orientation est non identique est rapportée par calcul à une étendue (7) lorsque l'orientation est identique.

2. Procédé selon la revendication 1,
**caractérisé en ce que**
le capteur de caméra (1) est un capteur de caméra mono.

3. Procédé selon la revendication 1,
**caractérisé en ce que**
le capteur de caméra (1) est un capteur de caméra stéréo.

4. Procédé selon au moins l'une des revendications 1 à 3,
**caractérisé en ce que**
l'information de caméra comprend l'étendue spatiale (7) de la zone couverte par l'objet cible (4, 13, 17) sur le capteur de lumière (2) dans le capteur de caméra (1) le long d'une horizontale.

5. Procédé selon au moins l'une des revendications 1 à 4,
**caractérisé en ce que**
l'information de caméra comprend l'étendue spatiale (7) de la zone couverte par l'objet cible (4, 13, 17) sur le capteur de lumière (2) dans le capteur de caméra (1) le long d'une verticale.

6. Procédé selon au moins l'une des revendications 1 à 5,
**caractérisé en ce que**
l'information de caméra comprend une surface de la zone couverte par l'objet cible (4, 13, 17) sur le capteur de lumière (2) dans le capteur de caméra (1).

7. Procédé selon au moins l'une des revendications 1 à 6,
**caractérisé en ce que**
le capteur de lumière (2) est une puce de capteur CCD (Charge Coupled Device) ou une puce de capteur CMOS (Complementary Metal Oxide Semiconductor).

8. Procédé selon au moins l'une des revendications 1 à 7,
**caractérisé en ce qu'**
un rapport des étendues (5, 7, 14, 15, 18) est formé à partir des étendues spatiales (7) de la zone couverte par l'objet cible (4, 13, 17) par le capteur de lumière (2), le long de l'horizontale et de la verticale et/ou de la totalité de la surface couverte.

9. Procédé selon la revendication 8,
**caractérisé en ce que**
l'objet cible est attribué à une classe d'objets au moyen du rapport des étendues (5, 7, 14, 15, 18).

10. Procédé selon la revendication 9,
**caractérisé en ce que**
la classe d'objets classe l'objet cible (4, 13, 17) comme appartenant à une ou plusieurs des classes suivantes : marque de véhicules, modèle de véhicules, piéton ou cycliste.

11. Procédé selon au moins l'une des revendications 1 à 10,
**caractérisé en ce que**
comprend et/ou une information de position de l'objet cible (4, 13, 17), l'information de position étant basée en particulier sur un système global de navigation par satellite.

12. Procédé selon au moins l'une des revendications 1 à 11,
**caractérisé en ce que**
l'information sur l'étendue spatiale réelle (5, 14, 15, 18) de l'objet cible (4, 13, 17) et/ou l'information supplémentaire sur l'objet cible (4, 13, 17) est détectée au moyen d'une communication de véhicule à X.

13. Procédé selon la revendication 1,
**caractérisé en ce que**
la communication de véhicule à X échange des informations sur la base d'au moins un des modes de connexion suivants :
- connexion WLAN, en particulier conformément à IEEE 802.11,
- connexion ISM (bandes industrielle, scientifique/médicale),
- connexion infrarouge et
- connexion par téléphonie mobile.

14. Procédé selon au moins l'une des revendications 1 à 13,
**caractérisé en ce que**
la distance (8) à un objet cible (4, 13, 17) déterminée à l'aide de l'information de caméra est mise à disposition d'au moins un système d'assistance au conducteur.

15. Procédé selon au moins l'une des revendications 1 à 14,
**caractérisé en ce que**
l'information sur l'étendue spatiale réelle (5, 14, 15, 18) de l'objet cible (4, 13, 17) et/ou l'information supplémentaire sur l'objet cible (4, 13, 17) est validée au moyen d'une comparaison avec l'information de caméra.

16. Procédé selon au moins l'une des revendications 1 à 15,
**caractérisé en ce qu'**
un algorithme de détection d'objet cible du capteur de caméra (1) baisse un seuil de détection lorsque l'objet cible (4, 13, 17) a déjà été attribué à une classe d'objets au moyen de l'information sur l'étendue spatiale réelle (5, 14, 15, 18) de l'objet cible (4, 13, 17).

17. Système de détermination de distance, lequel est formé afin
de déterminer une distance d'un capteur de caméra (1) à un objet cible, comprenant le capteur de caméra (1) et un dispositif de communication de véhicule à X et/ou un dispositif d'enregistrement électronique,
le capteur de caméra (1) étant formé afin de détecter une information de caméra, laquelle comprend une étendue spatiale (7) de la zone couverte par l'objet cible (4, 13, 17) sur un capteur de lumière (2) dans le capteur de caméra (1), le système de détermination de distance étant formé afin de relier l'information de caméra, laquelle comprend l'étendue spatiale (7) de la zone couverte par l'objet cible (4, 13, 17) sur un capteur de lumière (2) dans le capteur de caméra (1), à une information sur l'étendue spatiale réelle (5, 14, 15, 18) de l'objet cible (4, 13, 17)
et
l'information sur l'étendue spatiale réelle (5, 14, 15, 18) de l'objet cible (4, 13, 17) comprenant l'étendue spatiale le long de l'horizontale et/ou le long de la verticale et/ou la section transversale de l'objet cible (4, 13, 17),
**caractérisé en ce qu'**
une information supplémentaire sur l'objet cible (4, 13, 17) comprend le sens de déplacement de l'objet cible (4, 13, 17) relativement au capteur de caméra (1), et **en ce que** le système de détermination de distance est formé afin d'exécuter un procédé selon au moins l'une des revendications 1 à 16.

18. Procédé selon la revendication 17,
**caractérisé en ce qu'**
une matrice de classe d'objets est enregistrée sur le dispositif d'enregistrement électronique, laquelle comprend des rapports d'étendues (5, 7, 14, 15, 18) le long de l'horizontale et de la verticale et/ou de la totalité de la surface couverte d'une multiplicité de classes d'objets différentes.
